# EUROPEAN PATENT SPECIFICATION

(11) **EP 0 353 513 B1**
(45) Date of publication and mention of the grant of the patent: **14.04.1993**
(21) Application number: 89112807.6
(22) Date of filing: 13.07.1989
(51) Int. Cl.: B29D 7/01, B65D 27/04, C08L 25/06

(54) **A non-dusting window envelope film utilizing a particulate anti-flecking agent**
Nichtverstaubende Fensterumschlagsfolie unter Verwendung eines teilchenförmigen Antifleckenmittels
Film antipoussière pour enveloppe à fenêtre utilisant un agent particulaire antistatique

(30) Priority: 18.07.1988 US 220296
(43) Date of publication of application: 07.02.1990
(73) Proprietor: THE DOW CHEMICAL COMPANY, Midland Michigan 48640-1967 (US)
(72) Inventor: Foster, Stephen I., Bexley Ohio 43209 (US); Stimler, Jeffrey J., Newark Ohio 43055 (US)
(74) Representative: Sternagel, Hans-Günther, Dr.

(56) References cited:
- US-A- 3 709 753

## Description

The invention relates to a window envelope and to reducing film dust formation during the process of preparing and patching of polystyrene window envelope film. A window envelope is an envelope with one or more openings of any shape, usually rectangular, which allows examination of any information, typically a name and an address, printed on a limited area of matter within. The opening or openings are sealed or closed by a window patch composed of a non-opaque plastic film, usually polystyrene.

US-A-3,709,753 refers to a method of applying windows to envelopes where a volatile solvent is applied to the underside of the blank for making an envelope to saturate the blank around the window opening. Then a transparent strip such as polystyrene which is slightly larger than the window opening is pressed onto the blank over the window opening.

From DE-A-2 301 496 a rubber modified polystyrene is known comprising an anti-static agent. A useful agent is a long chain aliphatic acid amide or its alkylene oxide derivatives. The preferred agent is lauric diethanol amide.

Patching is the process in which window envelope film is cut into patches of a desired length and width, gummed around the edges, and applied to the window envelope. Alternatively, the edges of the window opening or openings may be gummed instead of the edges of the window patch. The patching process requires the use of a vacuum drum to ensure proper positioning of the film. Film dust results from abrasion and scratching of the passing film by the surface of the vacuum drum due to the disparity in the speed of the passing film and the angular velocity of the drum. The abrasions and imperfections on the surface of the vacuum drum fleck away particles from the surface of the passing film resulting in film dust.

Film dusting was not a serious problem until recent advances in the operating speed of window envelope film patching units. Older units operated at about 400 envelopes per minute while modern units typically operate at about 800-1000 envelopes per minute. The increased abrasion and scratching of the passing film by the surface of the vacuum drum exacerbated the dusting phenomena to the point of becoming a problem.

The vacuum drum on a typical commercial patcher has a multiplicity of minute vacuum holes and grooves on its surface to effect the adherence thereto and guidance thereon of the passing film or film patches. Vacuum holes are recessed in the grooves, which traverse the surface of the vacuum drum in both the machine and cross-machine directions relative to the passing window envelope film. The film dust accumulates in the vacuum holes and grooves and on the raised surfaces of the drum frustrating the adhering effects of the vacuum. Film dust also accumulates at a lesser rate in the internal areas of the vacuum drum and in the apparatus creating the vacuum. Process downtime is required to clean the vacuum drum and associated vacuum implementation equipment.

Window envelope films are typically composed primarily of extruded polystyrene and, optionally, contain a small proportion of a rubber-modified polymer to add a cosmetically desirable haze or measure of translucency to the film with the measure of translucency being proportional to the concentration of the rubber-reinforced polymer. Window envelope film may be manufactured in biaxial or uniaxial orientations. Biaxial orientation is generally preferred because of the superior cuttability of the film in the transverse or cross-machine direction.

It is the object of the present invention to provide a window envelope having the window opening covered by a transparent polystyrene film strip having a reduced dusting behavior.

This object is attained by a window envelope having one or more window openings, the window openings being entirely closed by a non-opaque plastic window patch being formed of a window envelope film comprising polystyrene, characterized in that the window envelope film comprises a dust-reducing quantity of one or more anti-flecking agents in the form of particles of a size sufficient to reduce dust formation and having a melting point greater than the polystyrene of the window envelope film and being substantially noncompatibilized and chemically inert with and substantially insoluble in the window envelope film.

The solution of the object includes also a method for preparing an extruded non-opaque window envelope film comprising polystyrene, characterized by incorporating into the window envelope film composition before extrusion a dust-reducing quantity of one or more anti-flecking agent(s) in the form of particles of a size sufficient to reduce dust formation and having a melting point greater than the polystyrene of the window envelope film and being substantially non-compatibilized and chemically inert with and substantially insoluble in the window envelope film.

This window envelope film is used for patching a window envelope according to the present invention.

The beneficial effect of adding particles to the envelope film is not completely understood but is believed to be due to several factors. These factors include raised film surface area and dry lubrication. Dispersion of particles in the film, and thus, the surface of the film effectively raises the surface of the film at each particle point and the localized area around each particle point. The extent of surface raising and the area affected will be proportional to the dimension of the protruding particle portion perpendicular to the tangential plane at the particle point contact area on the vacuum drum surface. The greater the dimension of the protruding particle, the greater the area of raised surface around the particle. The reduction in film surface area in contact with the abraded and imperfect surface of the vacuum roll at any given time results in a significant reduction in film dust formation.

The particle surfaces contacting the vacuum drum surface may act as a dry lubricant if the intrinsic coefficient of friction of the particle material is less than that of the window envelope film itself. The partial substitution of film surface by lubricant particle surface lowers friction between the drum surface and the passing film. Further, some of the particles may fleck from the surface of the film and act as ball bearings between the film surface and the drum surface. Accordingly, in a preferred embodiment, the anti-flecking agents utilized in the present invention possess a coefficient of friction less than that of the envelope film and any other particulate substance which might be present at the surface of the film such as a compatibilized rubber particulate hazing agent.

A non-dusting window envelope film is, for the purpose of the present invention, defined as a polystyrene window envelope film with an amount of an anti-flecking agent added sufficient to reduce film dust formation on the surface of the vacuum drum of the patching unit of the type specified in the Comparitive Example to an extent that there is no trace visible to the unaided eye after a 1219 meters (4000 feet) run of such film when conducted at substantially the same processing conditions as in the Comparitive Example. Subsequent references to a dust-reducing quantity of an anti-flecking agent mean an amount or concentration of an anti-flecking agent in the window envelope film sufficient to effectuate the desired dust-reducing characteristic of above said non-dusting window envelope film.

The anti-flecking agent is substantially non-compatibilized, chemically-inert, and insoluble in the polystyrene window envelope film. Being non-compatibilized refers to a substantial lack of chemical (e.g. polymeric) linking or bonding with the polystyrene component and preferably such a lack with respect to any other substance in the film. Being chemically inert refers to a substantial inability to react with the polystyrene component, or, preferably, also the hazing agent if any or any other component which might be present in the window envelope film. Being insoluble refers to a substantial inability to dissolve in the polystyrene component to an extent such that the physical integrity of the individual particles is substantially maintained.

The composition of a non-dusting window envelope film is preferably from 90-99.9 percent polystyrene, from 0.1 to 3 percent total by weight of one or more anti-flecking agents, and, optionally, an amount of a hazing agent sufficient to haze the film. The preferred particle size range for the anti-flecking agent is from 0.1 to 10.0 µm number average particle size. The most effective particle size is generally 1/100th to 1/4th of the film thickness. Larger sized particles generally result in too rough a film surface and adversely affect film strength and other properties. Smaller sized particles are generally less effective in reducing dust formation.

Suitable inorganic anti-flecking agents include particulated graphite, mica, chalk, calcium sulfate. calcium silicate, talcum, etc. Examples of suitable organic polymeric anti-flecking agents include particulated polyester, polytetrafluoraethylene (PTFE), and nylon. Preferred particulate anti-flecking agents are non-compatibilized and non-rubberized. Rubberized particles are not as effective in substantially reducing or eliminating dusting as are non-rubberized particles. Most preferred anti-flecking agents are dry lubricants such as talcum powder and particulated PTFE which have a coefficient of friction less than that of the surface of the remainder of the window envelope film and preferably the hazing agent if it is in particulate form.

The hazing agent is a substance, usually a rubber compound, added to the polystyrene to reduce film gloss and add a measure of haze or translucency or contact clarity to the film. Contact haze is desirable in window envelope film because the information shown in the window envelope is more easily read with than without the haze, and any information outside the window opening is made more difficult to read. Examples of suitable hazing agents include rubbery homopolymers of conjugated dienes, especially butadiene, and random, block, or grafted copolymers thereof with up to about 40 percent of a comonomer such as styrene, EPDM rubbers, acrylate rubbers, chlorinated polyethylene, etc. The rubbery compound may be in the form of random or block copolymers. The rubbery compound is preferably present in the film in the form of rubber particles compatabilized with the polystyrene component by copolymerization. Desirably, the rubber particles incorporated should be of sufficient size to result in haze formation. Preferred are rubber particles of from 0.5 to 8.0 µm number average particle size and most preferably from 1.0 to 3.0 µm.

A most preferred rubber compound is the rubbery component of high-impact polystyrene (HIPS), especially such compositions of polybutadiene and polystyrene prepared by mass or solution polymerization containing from 5-10 percent by weight rubber. The compatibilized polybutadiene or rubber particles are interspersed in the greater polystyrene matrix of the high-impact polystyrene. A preferred film forming composition contains from 0.1 to 1.0 percent rubber by weight as a hazing agent. A most preferred film forming composition contains from 0.5 to 0.7 percent rubber by weight as a hazing agent.

The compatibilized rubber particles do not perform satisfactorily as antiflecking agents in substantially reducing or eliminating film dust formation. While the presence of such compatibilized rubber particles may result in a partial reduction of film dusting, such particles cannot be added to the film in a concentration sufficient to substantially reduce or eliminate such dusting. Likewise, the diameter of the compatibilized rubber particles may be increased to reduce dusting, but the particle size limitations previously discussed allow for only partial reduction in dusting. Finally, the compatibilized rubber particles have a higher coefficient of friction than lubricious anti-flecking agents such as talcum and polytetrafluoroethylene.

The following examples are further illustrative of the present invention, and are not to be construed as limiting. Unless otherwise indicated, all parts and percentages are based upon weight.

### Examples

The test films were manufactured in a blown tubular extrusion process though manufacture by other processes such as cast film tentering extrusion is both feasible and practical. The film constituents, polystyrene, high-impact polystyrene, and, in the case of the treated films, the anti-flecking agent, were blended at a temperature between 204-269°C (400-500°F). The most preferred blending temperature is 238°C (460°F).

The operating temperature at the extrusion die is between 149-232°C (300-450°F) with the preferred temperature being 216°C (420°F).

### Comparative Example

The control run determined the extent of dust formation on the vacuum drum for a comparative polystyrene window envelope film containing polystyrene of about 300,000 molecular weight and 10 percent HIPS by weight of 3 µm number average particle size as a hazing agent. The HIPS component in both the control film and the treated films comprised 7.0 percent by weight polybutadiene particles and 93 percent by weight polystyrene, corresponding to 0.7 percent by weight polybutadiene particles in the entire film. The control film did not contain an anti-flecking agent.

Five runs of control film of 30 µm gauge, 11.43 cm (4.5 in.) width, 7.98 cm (3.14 in.) patch length, and 1219 meters (4000 feet) in length were processed on the HSP Patcher for the F. L. Smithe RA 800 Series Envelope Machine. The HSP Patcher has 0.16 cm (1/16 in.) diameter vacuum holes recessed in grooves in both the machine and non-machine directions along the vacuum drum surface. The vacuum drum operated at 800 RPM and 23.7 kilopascals (7 in. Hg) vacuum. After each run, ethylacetate was used to remove the film dust from the surface of the vacuum drum. The solvent was then evaporated and the residue weighed. The average weight of flecked film deposited on the surface of the drum was 5.4 mg. While this amount may seem small, this was only about thirty-three minutes production. Active commercial patching units must be cleaned as often as each week.

Although film dust accumulates in other areas such as the internal areas of the vacuum drum and the surface of the passing film, the important measure of dusting is the amount of dust deposited on the surface of the vacuum drum since the rate of deposition there is much greater than the other areas.

The results of the control runs indicate the unsuitability of the HIPS particle as an antiflecking agent at concentrations not resulting in an unacceptably high level of hazing. Increasing the size of the HIPS particle will lower dusting but not to acceptable levels.

For purposes of comparison, the extent of dusting by the films treated with the anti-flecking agents was estimated relative to that of the control films with only the polystyrene and the hazing agent. The surface of the vacuum drum was visually inspected after each test run of the treated films. Visual inspection of the surface of the vacuum drum after a short run is an acceptable means of identifying and estimating the extent of dusting since trace amounts are easily observable. Dusting of the order of 5.4 mg. as in the control tests was readily visible.

### Examples 1 and 2

Window envelope films containing, respectively, talcum and PTFE powders were processed on the same HSP patcher at substantially the same conditions and film dimension specifications as the control film.

Two 4000 feet (1219 meters) runs of a window envelope film comprising 1 percent by weight talcum powder of a 2 µm number average particle size, 10 percent by weight HIPS as a hazing agent as above, and the remainder polystyrene as above were conducted. Visual examination of the vacuum drum surface revealed an almost complete lack of film dust. In fact, the film containing talcum powder had the effect of polishing the drum.

Two 1219 meters (4000 feet) runs of a window envelope film comprising 0.5 percent by weight Plastomer DC-3 (marketed by Garlock Inc.) PTFE powder of a 2 µm micron number average particle size, 10 percent by weight HIPS as a hazing agent as above, and the remainder polystyrene as above were conducted. Visual examination of the surface of the vacuum drum revealed an almost complete lack of film dust as it had with the film with the talcum powder particles. A run of (48,000 feet) 13,716 meters of the same film likewise showed no trace of dusting on the surface of the vacuum drum.

## Claims

1. A window envelope having one or more window openings, the window openings being entirely closed by a non-opaque plastic window patch being formed of a window envelope film comprising polystyrene,
**characterized in that**
the window envelope film comprises a dust-reducing quantity of one or more anti-flecking agents in the form of particles of a size sufficient to reduce dust formation and having a melting point greater than the polystyrene of the window envelope film and being substantially non-compatibilized and chemically inert with and substantially insoluble in the window envelope film.

2. The window envelope of claim 1,
**characterized in that**
the one or more anti-flecking agent(s) are non-rubberized.

3. The window envelope of claim 1,
**characterized in that**
the window envelope film comprises from 0.1 to 3.0 percent by weight of one or more anti-flecking agent(s) having a number average particle size from 0.1 to 10.0µm.

4. The window envelope of claim 3,
**characterized in that**
the window envelope film comprises from 0.25 to 1.0 percent by weight of one or more anti-flecking agent(s).

5. The window envelope of claim 1,
**characterized in that**
the anti-flecking agent is talcum powder or particulated polytetrafluoroethylene.

6. The window envelope of claim 1,
**characterized in that**
the window envelope film comprises a hazing agent in an amount sufficient to provide a hazing effect reducing the film gloss.

7. The window envelope of claim 6,
**characterized in that**
the hazing agent is a rubber and is present in an amount from 0.1 to 1.0 percent by weight.

8. A method for preparing an extruded non-opaque window envelope film comprising polystyrene,
**characterized by**
incorporating into the window envelope film composition before extrusion a dust-reducing quantity of one or more anti-flecking agent(s) in the form of particles of a size sufficient to reduce dust formation and having a melting point greater than the polystyrene of the window envelope film and being substantially non-compatibilized and chemically inert with and substantially insoluble in the window envelope film.

9. The method of claim 8,
**characterized by**
using a non-rubberized anti-flecking agent.

10. The method of claim 8,
**characterized by**
using a window envelope film composition comprising from 0.1 to 3.0 percent by weight of one or more anti-flecking agent(s) having a number average particle size from 0.1 to 10.0µm.

11. The method of claim 10,
**characterized in that**
the window envelope film composition comprises from 0.25 to 1.0 percent by weight of one or more anti-flecking agent(s).

12. The method of claim 8,
**characterized by**
using a window envelope film composition comprising talcum powder or particulated polytetrafluoroethylene as one or more anti-flecking agent(s).

13. The method of claim 8,
**characterized by**
using a window envelope film composition comprising a hazing agent in an amount sufficient to provide a hazing effect reducing the film gloss.

14. The method of claim 13,
**characterized in that**
the hazing agent is present in an amount of from 0.1 to 1.0 percent by weight.

15. Use of the window envelope film prepared according to any of claims 8 to 14 for patching a window envelope.

## Patentansprüche

1. Fensterbriefumschlag mit einer oder mehreren Fensteröffnungen, wobei die Fensteröffnung(en) durch ein nichtopakes Fensterteil aus Kunststoff, das aus einer polystyrolhaltigen Fensterumschlagfolie hergestellt ist, vollständig verschlossen ist(sind)
**dadurch gekennzeichnet,**
daß die Fensterumschlagfolie eine staubverringernde Menge eines oder mehrerer Antifleckenmittel enthält, in der Form von Teilchen mit einer zum Verringern der Staubbildung ausreichenden Größe und mit einem Schmelzpunkt über dem des Polystyrols der Fensterumschlagfolie und die im wesentlichen unverträglich und chemisch inert mit und im wesentlichen unlöslich in der Fensterumschlagfolie sind.

2. Fensterbriefumschlag nach Anspruch 1,
**dadurch gekennzeichnet,**
daß das eine oder die mehreren Antifleckenmittel nicht gummiert sind.

3. Fensterbriefumschlag nach Anspruch 1,
**dadurch gekennzeichnet,**
daß die Fensterumschlagfolie von 0,1 bis 3,0 Gew.-% ein oder mehrere Antifleckenmittel mit einer zahlenmittleren Teilchengröße von 0,1 bis 10,0 µm enthält.

4. Fensterbriefumschlag nach Anspruch 3,
**dadurch gekennzeichnet,**
daß die Fensterumschlagfolie von 0,25 bis 1,0 Gew.-% ein oder mehrere Antifleckenmittel enthält.

5. Fensterbriefumschlag nach Anspruch 1,
**dadurch gekennzeichnet,**
daß das Antifleckenmittel Talkpulver oder teilchenförmiges Polytetrafluorethylen ist.

6. Fensterbriefumschlag nach Anspruch 1,
**dadurch gekennzeichnet,**
daß die Fensterumschlagfolie ein Mattierungsmittel mit einer zum Erzeugen eines Mattierungseffektes, der den Glanz der Folie verringert, ausreichenden Menge enthält.

7. Fensterbriefumschlag nach Anspruch 6,
**dadurch gekennzeichnet,**
daß das Mattierungsmittel ein Kautschuk ist und in einer Menge von 0,1 bis 1,0 Gew.-% vorhanden ist.

8. Verfahren zum Herstellen einer extrudierten, nichtopaken, polystyrolhaltigen Fensterumschlagfolie,
**gekennzeichnet durch**
Einbringen einer staubverringernden Menge eines oder mehrerer Antifleckenmittel in die Fensterumschlagfolienzusammensetzung vor der Extrusion in der Form von Teilchen mit einer zum Verringern der Staubbildung ausreichenden Größe und mit einem Schmelzpunkt über dem des Polystyrols der Fensterumschlagfolie und die im wesentlichen unverträglich und chemisch inert mit und im wesentlichen unlöslich in der Fensterumschlafolie sind.

9. Verfahren nach Anspruch 8,
**gekennzeichnet durch**
Verwendung eines nicht gummierten Antifleckenmittels.

10. Verfahren nach Anspruch 8,
**gekennzeichnet durch**
Verwendung einer Fensterumschlagfolienzusammensetzung, enthaltend von 0,1 bis 3,0 Gew.-% eines oder mehrerer Antifleckenmittel mit einer zahlenmittleren Teilchengröße von 0,1 bis 10,0 µm.

11. Verfahren nach Anspruch 10,
**dadurch gekennzeichnet,**
daß die Fensterumschlagfolienzusammensetzung von 0,25 bis 1,0 Gew.-% ein oder mehrere Antifleckenmittel enthält.

12. Verfahren nach Anspruch 8,
**gekennzeichnet durch**
Verwendung einer Fensterumschlagfolienzusammensetzung, enthaltend Talkpulver oder teilchenförmiges Polytetrafluorethylen als ein oder mehrere Antifleckenmittel.

13. Verfahren nach Anspruch 8,
**gekennzeichnet durch**
Verwendung einer Fensterumschlagfolienzusammensetzung, die ein Mattierungsmittel in einer zum Erzeugen eines Mattierungseffektes, der den Glanz der Folie verringert, ausreichenden Menge enthält.

14. Verfahren nach Anspruch 13,
**dadurch gekennzeichnet,**
daß das Mattierungsmittel in einer Menge von 0,1 bis 1,0 Gew.-% vorhanden ist.

15. Verwendung der nach einem der Ansprüche 8 bis 14 hergestellten Fensterumschlagfolie zum Verschließen des Fensters eines Fensterbriefumschlages.

## Revendications

1. Enveloppe à fenêtre, comprenant une ou plusieurs ouvertures de fenêtre, ces ouvertures de fenêtre étant entièrement fermées par une pièce de fenêtre en matière plastique non opaque, pièce formée d'un film pour fenêtre d'enveloppe, comprenant du polysryrène,
caractérisée en ce que le film pour fenêtre d'enveloppe contient une certaine quantité, permettant de réduire la formation de poussières, d'un ou de plusieurs agents anti-mouchetures, sous forme de particules de taille suffisante pour réduire la formation de poussières, présentant un point de fusion supérieur à celui du polystyrène du film pour fenêtre d'enveloppe, et pratiquement non compatibilisés et chimiquement inertes vis-à-vis du film pour fenêtre d'enveloppe et pratiquement insolubles dans celui-ci.

2. Enveloppe à fenêtre selon la revendication 1, caractérisée en ce que le ou les agents anti-mouchetures ne sont pas caoutchoutés.

3. Enveloppe à fenêtre selon la revendication 1, caractérisée en ce que le film pour fenêtre d'enveloppe contient de 0,1 à 3,0 % en poids d'un ou de plusieurs agents anti-mouchetures dont les particules ont une taille moyenne en nombre de 0,1 à 10,0 µm.

4. Enveloppe à fenêtre selon la revendication 3, caractérisée en ce que le film pour fenêtre d'enveloppe contient de 0,25 à 1,0 % en poids d'un ou de plusieurs agents anti-mouchetures.

5. Enveloppe à fenêtre selon la revendication 1, caractérisée en ce que l'agent anti-mouchetures est une poudre de talc ou un polytétrafluoroéthylène en particules.

6. Enveloppe à fenêtre selon la revendication 1, caractérisée en ce que le film pour fenêtre d'enveloppe contient un agent de voile en une quantité suffisante pour fournir un effet de voile réduisant le brillant du film.

7. Enveloppe à fenêtre selon la revendication 6, caractérisée en ce que l'agent de voile est un caoutchouc qui est présent en une quantité de 0,1 à 1,0 % en poids.

8. Procédé de préparation d'un film extrudé et non opaque pour fenêtre d'enveloppe, comprenant du polystyrène, caractérisé en ce que l'on incorpore dans la composition pour fenêtre d'enveloppe, avant l'extrusion, une certaine quantité, permettant de réduire la formation de poussières, d'un ou de plusieurs agents anti-mouchetures, sous forme de particules de taille suffisante pour réduire la formation de poussières, présentant un point de fusion supérieur à celui du polystyrène du film pour fenêtre d'enveloppe, et pratiquement non compatibilisés et chimiquement inertes vis-à-vis du film pour fenêtre d'enveloppe et pratiquement insolubles dans celui-ci.

9. Procédé selon la revendication 8, caractérisé en ce qu'on utilise un agent anti-mouchetures non caoutchouté.

10. Procédé selon la revendication 8, caractérisé en ce qu'on utilise une composition de film pour fenêtre d'enveloppe contenant de 0,1 à 3,0 % en poids d'un ou de plusieurs agents anti-mouchetures dont les particules ont une taille moyenne en nombre de 0,1 à 10,0 µm.

11. Procédé selon la revendication 10, caractérisé en ce qu'on utilise une composition de film pour fenêtre d'enveloppe contenant de 0,25 à 1,0 % en poids d'un ou de plusieurs agents anti-mouchetures.

12. Procédé selon la revendication 8, caractérisé en ce qu'on utilise une composition de film pour fenêtre d'enveloppe contenant une poudre de talc ou un polytétrafluoroéthylène en particules, en guise d'un ou de plusieurs agents anti-mouchetures.

13. Procédé selon la revendication 8, caractérisé en ce qu'on utilise une composition de film pour fenêtre d'enveloppe contenant un agent de voile en une quantité suffisante pour fournir un effet de voile réduisant le brillant du film.

14. Procédé selon la revendication 13, caractérisé en ce que l'agent de voile est présent en une quantité de 0,1 à 1,0 % en poids.

15. Utilisation d'un film pour fenêtre d'enveloppe, préparé selon l'une quelconque des revendications 8 à 14, comme pièce d'une enveloppe à fenêtre.
